# NEUE EUROPÄISCHE PATENTSCHRIFT

(11) **EP 1 340 010 B2**
(45) Veröffentlichungstag und Bekanntmachung des Hinweises auf die Entscheidung über den Einspruch: **21.07.2010**
(45) Hinweis auf die Patenterteilung: 16.03.2005
(21) Anmeldenummer: 01990473.9
(22) Anmeldetag: 03.12.2001
(51) Int. Cl.: F16J 15/12, F16J 15/08

(54) **FLACHDICHTUNG FÜR EINE KOLBENKRAFT- ODER ARBEITSMASCHINE**
FLAT SEAL FOR A RECIPROCATING PISTON ENGINE OR MACHINE
JOINT PLAT POUR UN MOTEUR A PISTONS OU UNE MACHINE-OUTIL

(30) Priorität: 06.12.2000 DE 10060514
(43) Veröffentlichungstag der Anmeldung: 03.09.2003
(73) Patentinhaber: Carl Freudenberg KG, 69469 Weinheim (DE)
(72) Erfinder: HILGERT, Christoph, 51491 Overath (DE)
(86) Internationale Anmeldenummer: PCT/EP2001/014076
(87) Internationale Veröffentlichungsnummer: WO 2002/046647

(56) Entgegenhaltungen:
- DE-A- 2 849 018
- DE-A- 2 849 991
- DE-A- 3 134 015
- JP-A- 01 066 453
- JP-A- 60 145 663
- US- - 5 230 521
- US- - 5 582 415
- US-A- 5 370 406
- US-A- 6 145 847
- PATENT ABSTRACTS OF JAPAN vol. 012, no. 464 (M-771), 6. Dezember 1988 (1988-12-06) & JP 63 186950 A (NIPPON GASKET KK), 2. August 1988 (1988-08-02)

## Beschreibung

### Technisches Gebiet

Die Erfindung betrifft eine Flachdichtung für eine Kolbenkraft- oder Arbeitsmaschine, bestehend aus zumindest zwei aufeinander geschichteten Blechen einer Dicke von 0,05 - 0,5 mm, die zumindest auf der nach außen weisenden Seite mit einer Beschichtung aus einem elastomeren Film versehen sind, die einen durch die Außenkontur und/oder durch zumindest eine Zylinderbohrung und/oder einen Wasser- oder. Öldurchlass des Zylinderkopfes gebildeten Randbereich aufweist, an den zumindest ein umlaufender, in sich geschlossener Hohlraum angrenzt.

### Stand der Technik

Flachdichtungen für Kolbenkraft- oder Arbeitsmaschinen sind in verschiedenen Ausführungsformen bekannt, beispielsweise aus DE 195 31 232, DE 42 05 824, DE 195 39 245. Bei Nutzfahrzeugmotoren dienen derartige Zylinderkopfdichtungen dazu, die Trennfuge zwischen dem Zylinderkopf und dem Zylinderblock abzudichten. Sie bestehen in der Praxis meist aus einer oder mehreren zu einem Laminat verbundenen Metallblechplatten und besitzen eine oder mehrere Brennraumdurchgangsöffnungen sowie eine oder mehrere Flüssigkeitsdurchlassöffnungen, wovon letztere den Durchgang von Kühlwasser und/oder Schmieröl zwischen Zylinderkopf und Zylinderblock ermöglichen. Bei gebräuchlichen Zylinderkopfdichtungen umschließt häufig eine Vollsicke in einem Randbereich dichtend die Brennraumdurchgangsöffnungen. Auch die Abdichtung der Flüssigkeitsdurchgangsöffnungen erfolgt oft durch eine Sicke, welche in einem Randbereich die Öffnung umschließt. Beim Einbau der Zylinderkopfdichtung werden der Zylinderkopf und der Motorblock durch die Vorspannkraft der Zylinderschrauben zusammengedrückt. Die Sicken der dazwischen liegenden Flachdichtung stützen sich gegen die benachbarten Dichtflächen des Zylinderkopfs bzw. Motorblocks. Unmittelbar im Randbereich der Brennraumdurchgangsöffnungen und im Bereich der Zylinderkopfschrauben herrschen die größten spezifischen Flächenpressungen. Sogenannte Stopper umschließen die Brennraumdurchgänge und wirken als Verformungsbegrenzer. Neben dieser statischen Pressung ist die Dichtung im Betrieb des Motors dynamischen Belastungen ausgesetzt. Der Abstand zwischen den Dichtflächen ist zeitlich und örtlich nicht konstant. Angeregt durch die periodischen Explosionen im Verbrennungsraum kommt es zu vertikalen und horizontalen Relativbewegungen des Zylinderkopfs gegenüber dem Zylinderblock. Die Amplitude dieser Dichtspaltbewegungen ist umso größer, je größer der Abstand der betrachteten Stelle von den Zylinderkopfschrauben ist. Ein zeitlich stationärer Zustand lässt sich im Dichtspalt weder bei der Brennraum- noch bei der Flüssigkeitsabdichtung erreichen. Für eine dauerhafte und einwandfreie Abdichtung muss die Dichtung diesen Relativbewegungen möglichst lange durch ein elastisch nachgiebiges Verhalten folgen können. Dabei darf die Flachdichtung den dichtenden elastischen Kontakt mit den Dichtflächen des Zylinderblocks bzw. des Motorblocks nicht verlieren. Die Funktionsdauer dieses elastischen Rückfederungsvermögens begrenzt im Wesentlichen die Lebensdauer der Dichtung. Nach einer bestimmten Lastwechselzahl verringern sich die Federungseigenschaften der Flachdichtung. Am Ende der Gebrauchsdauer kommt es zu Undichtigkeiten bei der Abdichtung der Brennräume bzw. der Flüssigkeitsdurchtrittsöffnungen.

Aus der DE 31 34 015 A1 ist eine Zylinderkopfdichtung bekannt, bei welcher ein mit einem Lack oder mit einer Kunststoffschicht beschichtetes Blech im Bereich des Rands einer Brennraumdurchgangsöffnung unter Bildung eines ringförmigen Kanals mit überall vollständig geschlossenem Kanalhohlraum auf sich selbst zurück gebogen worden ist.

Aus der US 5,370,406 ist eine zweilagige Metall-Zylinderkopfdichtung bekannt, Jede der beiden Lagen weist dabei korrespondierende Sicken auf, welche unterschiedliche Federkonstanten aufweisen. Dies wird durch die unterschiedliche Gestaltung der beiden einander gegenüber liegenden Sicken erreicht.

### Darstellung der Erfindung

Aufgabe der Erfindung ist es, eine Flachdichtung mit verbesserter Dichtwirkung, hohem elastischem Rückfedervermögen, geringen Herstellungskosten und langer Betriebsdauer anzugeben.

Diese Aufgabe wird erfindungsgemäß bei einer Flachdichtung der eingangs genannten Art mit den Merkmalen von Anspruch 1 gelöst. Auf vorteilhafte Ausgestaltungen nehmen die Unteransprüche Bezug.

Die Brennraumdurchgangsöffnung bzw. der Flüssigkeitsdurchlass oder die Außenkontur wird in einem angrenzenden Randbereich durch einen geschlossen umlaufenden Hohlraum der Dichtung umgrenzt, der vollständig mit einem hydraulischen Medium gefüllt ist. Durch die Einspannkraft der Zylinderkopfschrauben wird die Flachdichtung zwischen Zylinderkopf und Zylinderblock gepresst, wodurch sich im Hohlraum ein konstanter hydrostatischer Druck ausbildet. Die den Hohlraum umschließende, flexible, schlauchförmige Einfassung passt sich dabei den unvermeidlichen Verzügen beim Einspannen an. Der dichtende Kontakt mit den Dichtflächen des Zylinderblocks bzw. des Motorblocks geht auch dann nicht verloren, wenn bei Betrieb der Maschine infolge des Zünddrucks Zylinderkopf und Zylinderblock sowohl vertikale wie auch horizontale Relativbewegungen ausführen. Das im Hohlraum eingeschlossene hydraulische Medium bewirkt eine Vergleichmäßigung der Dichtpressung über den Umfang der abzudichtenden Öffnung. Das elastisch nachgebende Verhalten der schlauchförrnigen Einfassung verbessert im Betriebszustand der Maschine die Dichtwirkung und erhöht die Lebensdauer der Flachdichtung.

Als hydraulische Medien eignen sich all jene Materialien, die zu einer Vergleichmäßigung der Dichtpressung über den Umfang der zu dichtenden Öffnung beitragen. Darunter fallen auch Materialien, wie beispielsweise ein Lot, das bei Betriebstemperatur flüssig wird. Die mechanischen Eigenschaften des den Hohlraum umschließenden Bleches werden nicht durch chemische Reaktionen zwischen dem hydraulischen Medium und dem Metall des Bleches beeinträchtigt.

Zwischen dem ersten Blech und dem zweiten Blech ein drittes Blech ist angeordnet und dieses dritte Blech in die Verbindung zwischen dem ersten und dem zweiten Blech einbezogen, wobei die beidseits des dritten Blechs vorhandenen Hohlräume miteinander in hydraulischer Verbindung stehen. Diese hydraulische Verbindung kann beispielsweise durch eine Durchströmöffnung im dritten Blech gebildet sein. Man erzielt durch diese Ausführungsform eine Flachdichtung mit hoher Steifigkeit, die auch bei großen Relativbewegungen des Zylinderkopfs gegenüber dem Motorblock den dichtenden Kontakt aufrecht erhält.

Vorzugsweise das dritte Blech im Bereich der ersten und der zweiten Sicke eine dritte Sicke eines abweichend gestalteten Profils auft. Je nach Form und Ausgestaltung dieser dritten Sicke lässt sich in weiten Grenzen das elastische Rückfedervermögen der Flachdichtung vorgeben. Durch die hydraulische Verbindung zwischen den Hohlräumen wird eine Ausbauchung des zwischen den beiden äußeren Blechen eingeschlossenen dritten Bleches vermieden. Die Flachdichtung kann an die unterschiedlichen Werkstoffe von Zylinderkopf bzw. Zylinderblock durch die im Querschnitt verschieden ausgebildeten Sicken sehr gut angepasst werden. Ein runder Querschnitt bzw. eine aus mehreren Teilsicken zusammengesetzte Sicke vergrößert die spezifischen Flächenpressungen mit der anliegenden Dichtfläche. Durch die vergrößerte Kontaktfläche mit der Dichtfläche des Zylinderkopfs werden Eingrabungen vermieden. Dies ist insbesondere dann von Vorteil, wenn der Zylinderkopf aus einer Leichtmetall-Legierung besteht.

Gemäß der Erfindung ist der Hohlraum durch zumindest eine Sicke des Bleches und ein die Sicke überbrückendes zweites Blech umschlossen, wobei die beiden Bleche an die Sicke angrenzend unlösbar miteinander verbunden sind. Bei dieser Konstruktion sind also zwei aufeinander geschichtete Bleche vorgesehen, von denen das eine im Randbereich einer Öffnung eine ringsumlaufende Sicke aufweist. Das andere dieser Bleche überbrückt diese Sicke. Die an die Sicke angrenzende unlösbare Verbindung der beiden Bleche verhindert eine, in Querschnittrichtung gesehene, horizontale Ausweichbewegung der Sickenbasis bei Pressung. Der Abstand zwischen den die Sicke stützenden Schenkeln an der Sickenbasis wird also trotz der Presskraft im Dichtspalt im Wesentlichen aufrecht erhalten. Folge davon ist eine hohe elastische Rückfedervermögen der Sicke. Dieses Rückfedervermögen gewährleistet, dass der Kontakt zwischen Flachdichtung und den Dichtflächen des Motorblocks bzw. Zylinderkopfs, der den eigentlichen Abdichteffekt bewirkt, auch bei relativ großen Dichtspaltbewegungen aufrechterhalten bleibt

Von Vorteil ist, wenn der Hohlraum vollständig mit einer hydraulischen Flüssigkeit gefüllt ist und die beiden Bleche flüssigkeitsdicht verbunden sind. Je nach Ausführung der Sicke kann eine hohe Federsteifigkeit erreicht werden. Hierbei ist von Vorteil, wenn das zweite Blech im Bereich der Sicke eine zweite Sicke aufweist, welche abweichend von der ersten Sicke gestaltet sein kann. Durch die unterschiedlich gestalteten Sicken kann die Flachdichtung hinsichtlich des Reibungsverhaltens der unterschiedlichen Werkstoffe von Zylinderkopf und Zylinderblock sehr gut angepasst werden. Im Querschnitt kann das Sickenprofil verschiedene Formen aufweisen, beispielsweise U-förmig oder dreieckförmig sein. Der dichtende Kontaktbereich der Flachdichtung mit den Dichtflächen von Zylinderkopf und Zylinderblock kann dadurch so gestaltet werden, dass auch nach einer langen Betriebsdauer diese Dichtflächen nicht durch Eingrabungen beschädigt werden. Die Bleche können aus gleichen oder unterschiedlichen Materialien, beispielsweise aus unterschiedlich dickem Federstahlblech, gefertigt sein. Selbstverständlich ist auch vorstellbar, dass andere Materialien verwendet werden, wie beispielsweise anstelle des Metallblechs Kunststoffe. In an sich bekannter Weise kann die Dichtung im Abdichtungsbereich mit einer elastomeren Schicht beschichtet sein. Dieser elastomere Film kann beispielsweise eine Gummischicht sein, die durch Aufsprühen oder Aufgießen auf die Hauptdichtflächen der Bleche aufgetragen wird. Durch die Presskräfte im Dichtspalt wird diese Gummischicht in Rauhtiefen der jeweiligen Dichtflächen eingepresst, wodurch man eine Mikroabdichtung erzielt.

### Kurzbeschreibung der Zeichnungen

Zur weiteren Erläuterung der Erfindung wird auf die Zeichnungen Bezug genommen, in deren Figuren verschiedene Ausführungsformen gemäß der Erfindung schematisch dargestellt sind. Es zeigen:
- Fig. 1: eine teilweise geschnittene Draufsicht auf einer Flachdichtung,
- Fig. 2 bis 4 und 7: Nicht beanspruchte Ausführungsformen zur Erläuterung der Erfindung,
- Fig. 5 und Fig. 6: Ausschnitte aus Schnitten durch bevorzugte Ausführungsformen der erfindungsgemäßen Flachdichtung.

### Ausführung der Erfindung

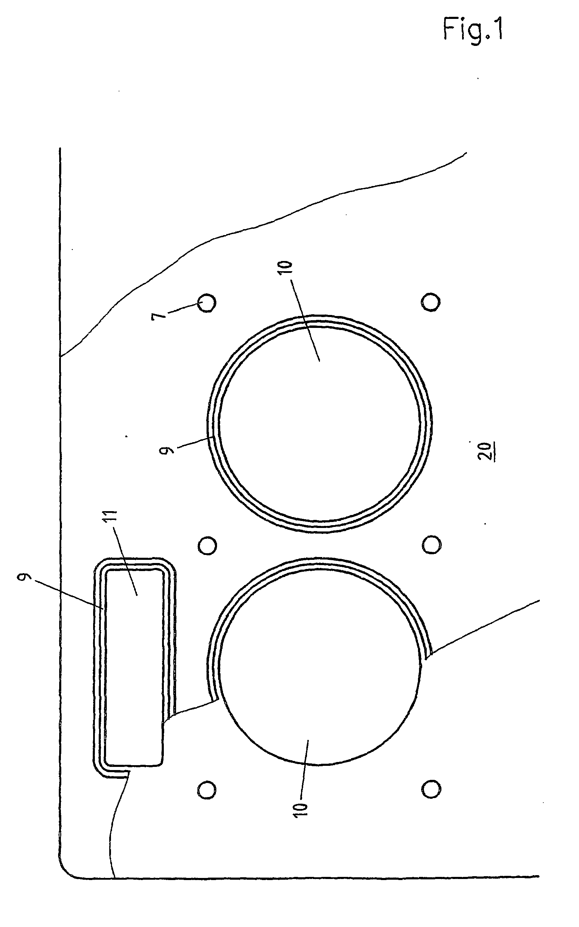

Eine Flachdichtung ist in einer Draufsicht in teilweise geschnittener Darstellung in Figur 1 gezeigt. Die Flachdichtung 20 bedeckt die Dichtflächen eines Motorblocks bzw. Zylinderkopfes welcher Zylinderbohrungen 10 und Flüssigkeitsdurchfassöffnungen 11 aufweist. Jede dieser Öffnungen 11, 10 wird in einem Randbereich 9 durch einen ringsumlaufenden, von einem Blech begrenzten Hohlraum umschlossen. Auch die Außenkontur der Flachdichtung kann mit einem solchen umlaufenden Hohlraum versehen sein. Entscheiden ist jeweils, dass der Hohlraum vollständig mit einem hydraulischen Medium gefüllt ist, so dass bei dynamischen Dichtspaltbewegung das Medium in Umfangsrichtung ausweichen und unterschiedlich große Anpresskräfte nivellieren kann. In Figur 1 ist der Hohlraum durch einen auf sich selbst zurückgebördelten Blechrand begrenzt. Wenn bei der Montage der Zylinderkopf und der Motorblock durch Zylinderkopfschrauben aneinander gepresst werden, wirken auf die Flachdichtung örtlich unterschiedlich große spezifische Flächenpressungen: In unmittelbarer Nähe der Bohrungen 7 der Zylinderkopfschrauben ist die statische Pressung am größten. Wie bereits oben erläutert überlagern sich dieser statischen Pressung dynamische Dichtspaltbewegungen: Bei Betrieb der Brennkraftmaschine kommt es zu vertikalen und horizontalen Relativbewegungen des Zylinderkopfs gegenüber dem Zylinderblock. Die Amplitude dieser Dichtspaltbewegungen ist um so größer, je größer der Abstand der betrachteten Stelle von einer Zylinderkopfschraube ist. Der gemäß der Erfindung vorgesehene, vollständig mit einem hydraulischen Medium gefüllte Hohlraum bewirkt nun eine Ausgleichung der Kontaktkräfte zwischen der Flachdichtung und den Dichtflächen des Motorblocks bzw. des Zylinderkopfs.

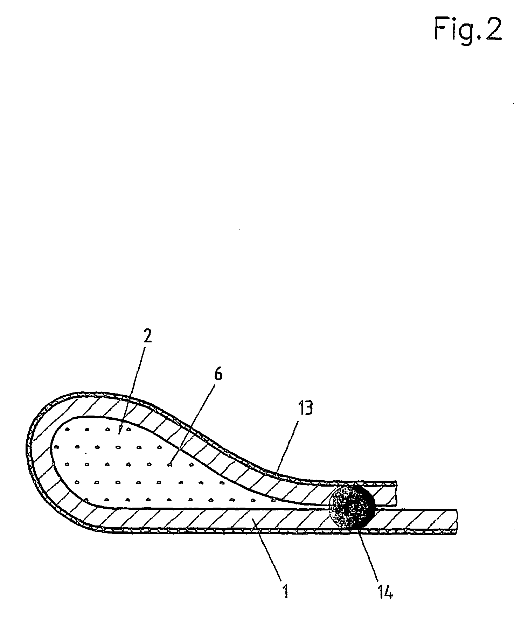

In Figur 2 ist ein Ausschnitt aus einem Schnitt durch eine nicht beanspruchte Ausführungsform der Flachdichtung dargestellt. Der eine Durchgangsöffnung umschließende Rand eines Bleches 1 ist dabei so umgebördelt, dass ein geschlossener Hohlraum 2 gebildet wird. Dieser Hohlraum 2 ist vollständig mit einem hydraulischen Medium 6 gefüllt. Als hydraulisches Medium sind all jene Stoffe geeignet, die zu einer Vergleichmäßigung der Dichtflächenpressung herbeiführen. Das Medium muss im Betrieb der Maschine in der schlauchförmigen Einfassung so zirkulieren, dass möglichst gleich große spezifische Flächenpressungen zwischen Flachdichtung und der jeweiligen Dichtfläche erhalten bleibt. Das hydraulische Medium kann beispielsweise eine Hydraulikflüssigkeit sein. Es ist aber auch vorstellbar, dass für die Brenngasabdichtung ein Lot verwendet wird, welches bei Betriebsbedingungen flüssig wird. Für eine Flachdichtung können unterschiedliche Stoffe verwendet werden. Wie im Ausführungsbeispiel in Fig. 2 dargestellt, ist der zurückgebördelte Blechrand mit dem Blech selbst durch eine unlösbare Verbindung 14 verbunden. Diese Verbindung 14 kann beispielsweise durch Elektronenstrahlschweißen flüssigkeitsdicht und mit geringen Kosten hergestellt werden. Der Abdichtungsbereich der Dichtung ist mit einer Elastomerschicht 13 beschichtet.

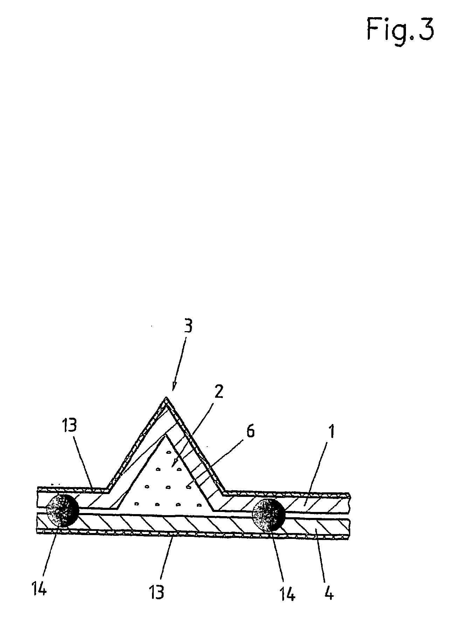

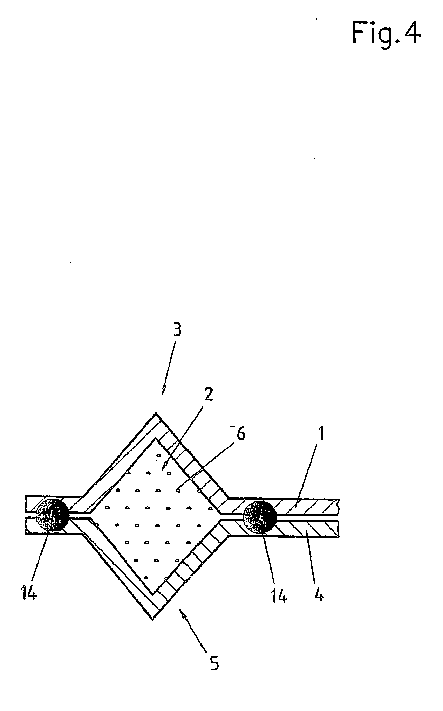

Figur 3 zeigt eine nicht beanspruchte Ausführungsform als Ausschnitt aus einem Schnitt der Flachdichtung. Der Hohlraum 2 wird durch die Sicke 3 eines Bleches 1 gebildet, welches von einem zweiten Blech 4 überdeckt wird. Beide Bleche 1, 4 sind beiderseits der Sicke 3 unlösbar durch eine Verbindung 14 verbunden. Die Bleche können 0,05 mm bis 0,5 mm dick sein. Zur Mikroabdichtung sind beide Bleche 1, 4 mit einer elastomeren Schicht 13 beschichtet. Das Blech 4 kann eben ausgebildet sein oder wie in Figur 4 dargestellt eine der Sicke 3 gegenüberliegende Sicke aufweisen. Das Rückfedervermögen der Flachdichtung kann so optimal angepasst werden.

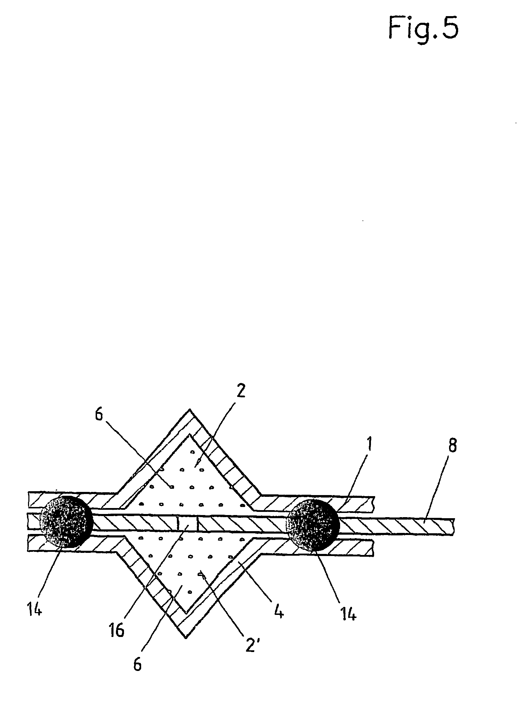

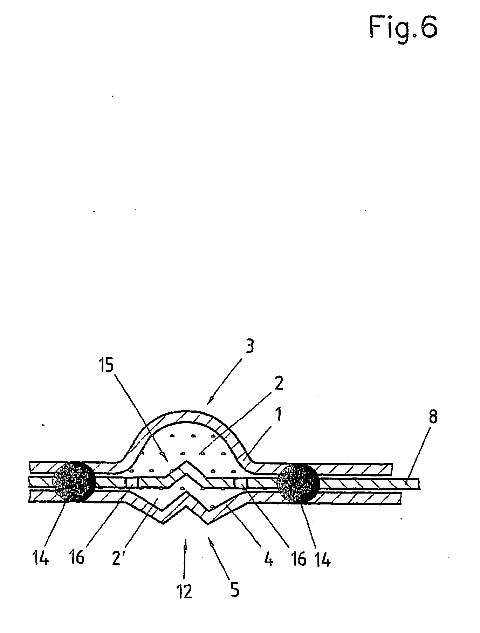

Die Schnittzeichnungen in Figur 5 und in Figur 6 zeigen jeweils eine bevorzugte Ausführungsform der Erfindung. Zwischen den beiden Blechen 1 und 4 ist ein drittes Blech 8 angeordnet. Die Verbindung 14 verbindet beiderseits einer jeden Sicke stoffschlüssig die drei Bleche 1, 8, 4. Auf diese Weise werden zwei Hohlräume 2, 2' gebildet, die jeweils mit einem hydraulischen Medium gefüllt sind. Eine Durchgangsöffnung 16 im dazwischen liegenden Blech 8 bildet eine hydraulische Verbindung zwischen den an Blech 8 angrenzenden Hohlräumen 2, 2'. Wie in Figur 6 gezeigt, kann das Blech 8 im Bereich der angrenzenden Hohlräume 2, 2' ebenfalls eine Sicke 15 aufweisen, wodurch sich das elastische Rückfedervermögen der Flachdichtung erhöht. Durch unterschiedliche Querschnittsformen der Sicken 5 und 3 kann die Flachdichtung hinsichtlich eines unterschiedlichen Reibungsverhaltens der jeweiligen Werkstoffe von Zylinderkopf bzw. Zylinderblock sehr gut angepasst werden. Der Kontaktbereich der Flachdichtung mit den ebenen Dichtflächen dieser Maschinenteile kann dadurch so gestaltet werden, dass auch nach einer vergleichsweise langen Betriebsdauer die Dichtflächen nicht beschädigt werden.

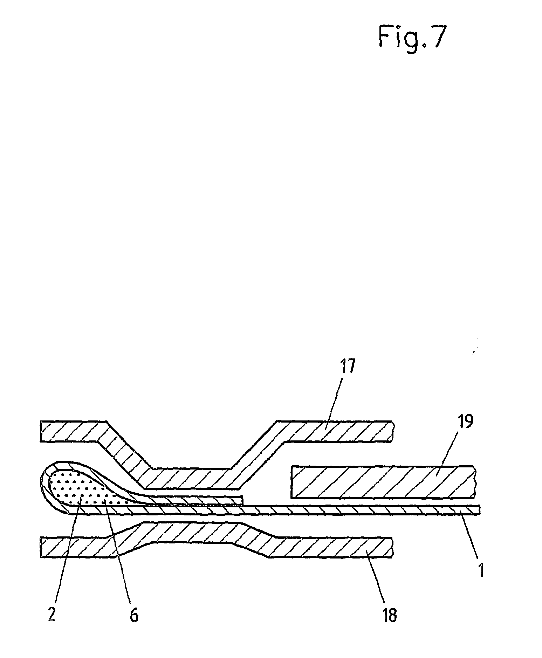

Eine weitere, nicht beanspruchte Ausführungsform ist in Fig. 7 gezeigt. Auch hier wird der die Durchtrittsöffnung umgrenzende Hohlraum 2 durch den auf sich selbst zurückgebördelten Rand des Bleches 1 gebildet. Der zurückgebogene Rand ist aber nicht verschweißt, sondern wird durch die Vorspannung der Zylinderkopfschrauben zwischen zwei Sicken der aktiven Lagen 17 und 18 gepresst. Zwischen den Lagen 17 und 18 ist angrenzend an den zurückgebördelten Rand eine Zwischenschicht 19 angeordnet. In Fig. 7 schließen die Lagen 17 und 18 den Hohlraum 2 sandwichartig ein. Selbstverständlich kann die Flachdichtung auch so aufgebaut sein, dass nur eine der aktiven Schicht 17 oder 18 vorhanden ist. Um Oberflächenfehlern, wie beispielsweise Porosität oder Lunker an der Zylinderblock- oder Motorblockdichtfläche auszugleichen kann die erfindungsgemäße Flachdichtung aussenseitig auch Decklagen umfassen.

## Patentansprüche

1. Flachdichtung (20) für eine Kolbenkraft- oder Arbeitsmaschine, bestehend aus zumindest einem Blech (1) einer Dicke von 0,05 bis 0,5 mm, das zumindest auf den nach außen weisenden Seiten in zumindest einem Abdichtungsbereich mit einer Beschichtung (13) aus einem elastomeren Film versehen ist, das einen durch die Außenkontur und/oder durch zumindest eine Zylinderbohrung und/oder einen Wasser- und/oder Öldurchlass (11) des Zylinderkopfes gebildeten Randbereich (9) aufweist, an den zumindest ein umlaufender, in sich geschlossener Hohlraum (2) angrenzt, wobei der Hohlraum (2) vollständig mit einem hydraulischen Medium (6) gefüllt ist, wobei der Hohlraum durch zumindest eine Sicke (3) des Bleches (1) und ein die Sicke überbrückendes zweites Blech (4) umschlossen ist, wobei die Bleche an die Sicke angrenzend unlösbar verbunden sind, wobei das Blech (1) und das zweite Blech (4) flüssigkeitsdicht verbunden sind wobei der Hohlraum (2) mit einem zumindest unter Betriebsbedingungen flüssigen Stoff gefüllt ist, wobei zwischen dem ersten Blech (1) und dem zweiten Blech (4) ein drittes Blech (8) angeordnet ist, wobei das dritte Blech in die Verbindung zwischen dem ersten und dem zweiten Blech einbezogen ist und wobei die beiderseits des dritten Bleches vorhandenen Hohlräume (2) miteinander in hydraulischer Verbindung (16) stehen.

2. Flachdichtung für eine Kolbenkraft- oder Arbeitsmaschine nach Anspruch 1, **dadurch gekennzeichnet, dass** das zweite Blech (4) im Bereich der Sicke (3) eine zweite Sicke (5) aufweist.

3. Flachdichtung für eine Kolbenkraft- oder Arbeitsmaschine nach Anspruch 2, **dadurch gekennzeichnet, dass** die zweite Sicke (5) abweichend von der ersten Sicke (3) gestaltet ist.

4. Flachdichtung für eine Kolbenkraft oder Arbeitsmaschine nach Anspruch 2 oder 3, **dadurch gekennzeichnet, dass** die zweite Sicke (5) ein Profil von geringerem Querschnitt als die erste Sicke (3) aufweist.

5. Flachdichtung für eine Kolbenkraft- oder Arbeitsmaschine nach Anspruch 2, **dadurch gekennzeichnet, dass** das zweite Blech (4) eine der Sicke (3) des ersten Bleches (1) entsprechende, spiegelbildliche zweite Sicke (5) aufweist.

6. Flachdichtung für eine Kolbenkraft- oder Arbeitsmaschine nach einem der Ansprüche 1 bis 5, **dadurch gekennzeichnet, dass** das dritte Blech (8) im Bereich der ersten und der zweiten Sicke eine dritte Sicke (15) eines abweichend gestalteten Profils aufweist.

7. Flachdichtung für eine Kolbenkraft- oder Arbeitsmaschine nach Anspruch 6, **dadurch gekennzeichnet, dass** die ersten, die zweiten und/oder die dritten Sicken in zumindest zwei Teilsicken (12) unterteilt sind.

8. Flachdichtung für eine Kolbenkraft- oder Arbeitsmaschine nach einem der Ansprüche 1 bis 7, **dadurch gekennzeichnet, dass** der Stoff durch ein Lot gebildet ist.

9. Zylinderkopfabdichtung, **dadurch gekennzeichnet, dass** zumindest zwei Flachdichtungen nach zumindest einem der Ansprüche 1 bis 8 enthalten sind.

## Claims

1. A flat seal (20) for a reciprocating piston engine or machine, comprising at least one metal sheet (1) of a thickness of from 0.05 to 0.5 mm, which is provided with a coating (13) of an elastomer film at least on the sides facing outward in at least one sealing area and has an edge area (9), formed by the outer contour and/or by at least one cylinder bore and/or a water and/or oil passage (11) in the cylinder head, adjacent to which is at least one peripheral, self-contained cavity (2), the cavity (2) being filled completely with a hydraulic medium (6), the cavity being enclosed by at least one bead (3) of the metal sheet (1) and a second metal sheet (4) bridging the bead, the metal sheets being undetachably connected adjacent to the bead, the metal sheet (1) and the second metal sheet (4) being connected in a fluid-tight manner, the cavity (2) being filled with a substance that is liquid at least under operating conditions, a third metal sheet (8) being arranged between the first metal sheet (1) and the second metal sheet (4), the third metal sheet being incorporated in the connection between the first and second metal sheets and the cavities (2) on both sides of the third metal sheet being in hydraulic connection (16) with one another.

2. A flat seal for a reciprocating piston engine or machine according to claim 1, **characterized in that**, in the area of the bead (3), the second metal sheet (4) has a second bead (5).

3. A flat seal for a reciprocating piston engine or machine according to claim 2, **characterized in that** the second bead (5) has a different design from that of the first bead (3).

4. A flat seal for a reciprocating piston engine or machine according to claim 2 or 3, **characterized in that** the second bead (5) has a profile of a smaller cross section than the first bead (3).

5. A flat seal for a reciprocating piston engine or machine according to claim 2, **characterized in that** the second metal sheet (4) has a second bead (5) corresponding in mirror image to the bead (3) of the first metal sheet (1).

6. A flat seal for a reciprocating piston engine or machine according to any one of claims 1 to 5, **characterized in that** the third metal sheet (8) in the area of the first and second beads has a third bead (15) of a differently shaped profile.

7. A flat seal for a reciprocating piston engine or machine according to claim 6, **characterized in that** the first, second and/or third beads are subdivided into at least two partial beads (12).

8. A flat seal for a reciprocating piston engine or machine according to any one of claims 1 to 7, **characterized in that** the substance is formed by a solder.

9. A cylinder head seal, **characterized in that** at least two flat seals according to at least any one of claims 1 to 8 are included.

## Revendications

1. Joint plat (20) pour un moteur à pistons ou une machine-outil, composé d'au moins une tôle (1) d'une épaisseur de 0,05 mm à 0,5 mm, qui est dotée au moins sur les côtés se dirigeant vers l'extérieur dans au moins une zone d'étanchéité d'une enduction (13) en film élastomère, qui présente une zone marginale (9) formée par le contour externe et/ou par au moins un alésage de cylindre et/ou un passage d'eau et/ou d'huile (11) de la tête de cylindre, à laquelle est adjacente au moins une cavité (2) périphérique, fermée en soi, dans lequel la cavité (2) est remplie intégralement d'un milieu hydraulique (6), la cavité étant entourée par au moins une moulure (3) de la tôle (1) et une deuxième tôle (4) enjambant la moulure, les tôles étant reliées de façon indétachable en étant adjacentes à la moulure, la tôle (1) et la deuxième tôle (4) étant reliées en étant étanches au liquide, la cavité (2) étant remplie d'au moins une matière liquide dans des conditions de fonctionnement, dans lequel entre la première tôle (1) et la deuxième tôle (4) est disposée une troisième tôle (8), la troisième tôle étant intégrée dans la liaison entre la première et la deuxième tôle et les cavités (2) présentes des deux côtés de la troisième tôle se trouvant ensemble dans une liaison hydraulique (16).

2. Joint plat pour un moteur à pistons ou une machine-outil selon la revendication 1, **caractérisé en ce que** la deuxième tôle (4) présente dans la zone de la moulure (3) une deuxième moulure (5).

3. Joint plat pour un moteur à pistons ou une machine-outil selon la revendication 2, **caractérisé en ce que** la deuxième moulure (5) est d'une structure différente de la première moulure (3).

4. Joint plat pour un moteur à pistons ou une machine-outil selon la revendication 2 ou 3, **caractérisé en ce que** la deuxième moulure (5) présente un profil de section transversale moindre que la première moulure (3).

5. Joint plat pour un moteur à pistons ou une machine-outil selon la revendication 2, **caractérisé en ce que** la deuxième tôle (4) présente une deuxième moulure (5) réfléchie, correspondant à la moulure (3) de la première tôle (1).

6. Joint plat pour un moteur à pistons ou une machine-outil selon l'une des revendications 1 à 5, **caractérisé en ce que** la troisième tôle (8) présente dans la zone de la première et de la deuxième moulure, une troisième moulure (15) d'un profil structuré différemment.

7. Joint plat pour un moteur à pistons ou une machine-outil selon la revendication 6, **caractérisé en ce que** les premières, les deuxièmes et/ou les troisièmes moulures sont subdivisées en au moins deux moulures partielles (12).

8. Joint plat pour un moteur à pistons ou une machine-outil selon l'une des revendications 1 à 7, **caractérisé en ce que** la matière est formée par une soudure.

9. Joint de tête de cylindre, **caractérisé en ce que** sont contenus au moins deux joints plats selon au moins l'une des revendications 1 à 8.
